# EUROPEAN PATENT SPECIFICATION

(11) **EP 3 065 374 B1**
(45) Date of publication and mention of the grant of the patent: **12.12.2018**
(21) Application number: 13896262.6
(22) Date of filing: 31.10.2013
(51) Int. Cl.: H04L 29/08

(54) **NETWORK CAPABILITY INVOKING METHOD**
VERFAHREN ZUR AKTIVIERUNG VON NETZWERKRESOURCEN
PROCÉDÉ D'ACTIVATION DE RESSOURCES DE RÉSEAU

(43) Date of publication of application: 07.09.2016
(73) Proprietor: Huawei Technologies Co., Ltd., Longgang District Shenzhen, Guangdong 518129 (CN)
(72) Inventor: LI, Yan, Shenzhen Guangdong 518129 (CN); WU, Wenfu, Shenzhen Guangdong 518129 (CN)
(74) Representative: Pfenning, Meinig & Partner mbB
(86) International application number: PCT/CN2013/086327
(87) International publication number: WO 2015/062026

(56) References cited:
- CN-A- 101 155 332
- CN-A- 102 202 045
- CN-A- 102 573 112
- CN-A- 103 036 729
- US-A1- 2005 249 190
- US-A1- 2007 005 725
- US-A1- 2008 091 800

## Description

### TECHNICAL FIELD

The present invention relates to the field of computer and communications technologies, and in particular, to an application server, a terminal device, and a network capability invoking system and method.

### BACKGROUND

With the rise of a mobile internet service and fading of a traditional circuit switched voice service, a mobile network operator needs a new profit growth point for running a telecommunication network. To avoid becoming a pipeline provider and suffering from a case in which a profit is not increased with a quantity, the mobile network operator considers to enable a telecommunication network capability, such as a charging capability or a quality of service (Quality of Service, QoS) capability, for an application provider or a content provider of the mobile internet. By enabling the foregoing particular capabilities of the network operator for a third party, extra revenue is acquired, so that win-win is implemented between a telecommunication operator and an application server.

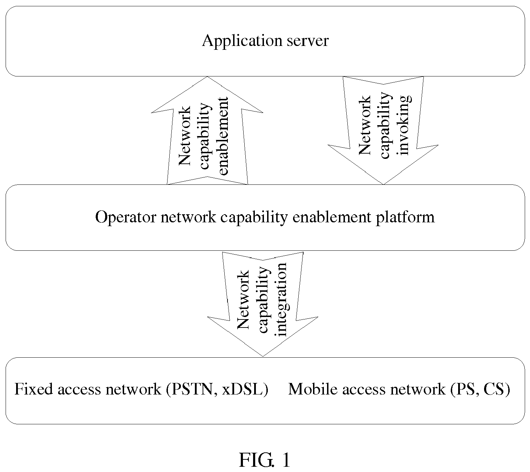

FIG. 1 is a current network capability enablement architecture. The telecommunication operator provides a capability enablement platform to enable a network capability for a mobile internet service provider, where the network capability is generally enabled in a manner of an application programming interface (Application Programming Interface, API), that is, a network capability interface. After the service provider invokes the API, the capability enablement platform of the operator interacts with an existing network device to implement a specific network operation. The network capability interface generally includes: service identification information (used by a network to identify the service), and parameter information related to an operation that needs to be performed for the service, for example, a QoS request and a charge-free request.

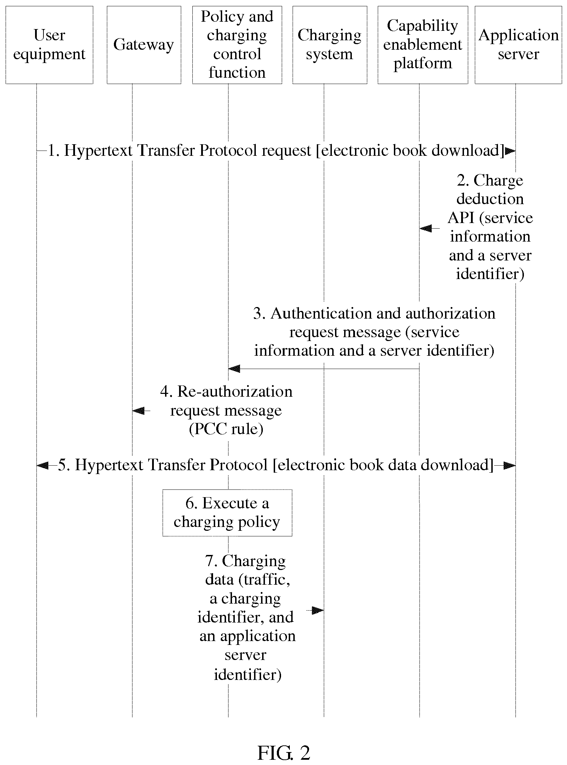

FIG. 2 is an example in which a third-party application invokes a network capability API. A scenario is that after an electronic book is sold by an electronic book website to a user, it is expected that a mobile operator makes no charge from the user for traffic needed for downloading the electronic book, and a fee of the traffic is paid by the electronic book website. In this way, the user does not need to worry about a high communication fee generated from that traffic exceeds a threshold because the user downloads the electronic book. A process is as follows:
(1) User equipment sends an application server an HTTP request for downloading an electronic book.
(2) The application server determines a mobile operator to which the user belongs and invokes, from a capability enablement platform of the corresponding operator, a charge deduction API, including service information (electronic book identification information, such as an IP 5-tuple), a server identifier, and a size of the electronic book (for example, a size of an electronic book is 5 M).
(3) The capability enablement platform of the operator verifies the application server, and determines that the application server has the authorization to invoke the API. The capability enablement platform sends, by using an Rx interface defined in a network standard, a network element policy and charging rules function unit (Policy and Charging Rules Function, PCRF) of the mobile operator an access authorization request message, which includes service information, an application server identifier, a free of charge indication, and a file size of an electronic book.
(4) The PCRF formulates a policy and charging control (Policy and Charging Control, PCC) rule according to the message over the Rx interface, where the rule includes service identification information (IP 5-tuple), a charging identifier, and an application server identifier. In addition, for a traffic threshold (generated from a file size) of the rule, the PCRF sends the rule to a gateway by using a Gx interface defined in a network standard.
(5) The user equipment starts to download the electronic book from the application server (website).
(6) The gateway detects a data packet, and if it is learned, according to the identification information in the PCC rule acquired in step (4), that the data packet is a service flow corresponding to the electronic book, the PCC rule is executed.
(7) According to an execution result of the PCC rule in step (6), the gateway sends charging data to a charging system, where the charging data includes a charging identifier, traffic information corresponding to the charging identifier, and an application server identifier. The charging system makes no charge for download traffic of the user according to the charging identifier, and charges the application server.

It can be seen from the foregoing process that, by enabling the charge deduction API, the operator acquires extra revenue from a third-party application server, and for the third-party application server, although an extra traffic fee is paid, it is convenient for the user to download the electronic book. The third-party application server may make up the traffic fee by using revenue obtained from selling more electronic books, achieving win-win.

The prior art described above mainly has two disadvantages:

First, the application server needs to trigger service logic for each user. Using FIG. 2 as an example, if tens of thousands of users download the electronic book on the website, the website needs to invoke the charge deduction API for tens of thousands times.

Secondly, users belong to different operators, different operators provide different capability enablement platforms, and charge deduction API manners provided by the different operators are also different. As a result, the application server needs to determine an operator to which the user belongs and then invoke a corresponding API from a corresponding capability enablement platform. This further requires the application server to introduce new determining logic; for example, a phone number of the user needs to be acquired first, and then the operator to which the user belongs is learned according to the phone number.

The foregoing two disadvantages cause that implementation of the application server is complicated and increase an implementation cost, where the cost here includes not only an extra processing cost of the server, such as a need for an extra CPU resource and storage resource network bandwidth to invoke a network capability API, but also an extra development cost, such as a need for modifying software of an existing server to implement complicated service logic. Because the implementation cost is extremely high, actually, that a third-party application server invokes a network capability API of an operator is impeded.

US 2005/0249190 A1 discloses a method and structure for providing call control in a telephone network that begins by directing a telephone call from a signal switching point to a service node, forwarding a HTTP call control extensible markup language (CCXML) application request from the service node to a server and parlay gateway combination, and forwarding a request for instructing from the server and parlay gateway combination to a telephony application server.

US 2008/0091800 A1 discloses a local user interface for supporting remote devices, such as a multifunction device and external applications.

CN 102573112 A discloses a method for providing access to telecommunication network capabilities by using network operator specific APIs integrated in service provider websites.

### SUMMARY

The subject matter of the present invention is defined by the appended claims. Further embodiments not covered by the claims are provided for background information to promote a deeper understanding of the invention.

Embodiments of the present invention provide an application server, a terminal device, and a network capability invoking system and method, so as to resolve a problem in the prior art that implementation of an application server is complicated and a cost is high.

To resolve the foregoing technical problem, the embodiments of the present invention disclose the following technical solutions:

According to a first aspect, an application server is provided, including:
a network capability interface integration unit, configured to: integrate network capability invoking information provided by an operator into a web page in the application server, and bind the network capability invoking information to a service link or a service script of a corresponding service in the web page, where the network capability invoking information includes a network capability interface needed by the corresponding service and address information of an operator capability enablement platform; and
a network capability interface delivery unit, configured to deliver the web page to a terminal device, so that when processing the service link or processing the service script, the terminal device invokes the network capability interface from the operator capability enablement platform according to the address information of the operator capability enablement platform.

In a first possible implementation manner of the first aspect, the network capability interface integration unit is specifically configured to bind respective network capability invoking information of different operators to the service link or the service script of the corresponding service, so that the terminal device identifies the different operators and invokes a network capability of a corresponding operator.

In a second possible implementation manner of the first aspect, the network capability interface integration unit is specifically configured to: bind the respective network capability invoking information of the different operators to the service link or the service script of the corresponding service, and provide an operator option in the web page for a user to select, so that the terminal device identifies the different operators and invokes a corresponding network capability interface according to address information of an operator capability enablement platform to which the terminal device belongs.

In a third possible implementation manner of the first aspect, the network capability interface integration unit is specifically configured to: bind the respective network capability invoking information of the different operators to the service link or the service script of the corresponding service, and integrate an operator identification script into the service link or into the service script, where the operator identification script is used to identify an operator to which the terminal device belongs, so that the terminal device invokes a corresponding network capability interface according to address information of an operator capability enablement platform to which the terminal device belongs.

In a fourth possible implementation manner of the first aspect, the network capability interface includes: at least one of a quality of service interface, a charging interface, and a network status query interface.

According to a second aspect, a terminal device is provided, including:
a page acquiring unit, configured to receive a web page delivered by an application server, where the web page includes a service link or a service script that is of a service and that is bound to network capability invoking information provided by an operator, and the network capability invoking information includes: a network capability interface and address information of an operator capability enablement platform;
a service parsing unit, configured to: parse the web page when the service link is being processed or the service script is being processed, so as to obtain the network capability interface and the address information of the operator capability enablement platform; and
a network capability request unit, configured to: invoke the network capability interface according to the address information of the operator capability enablement platform, so as to request a corresponding network capability from the operator.

In a first possible implementation manner of the second aspect, the web page includes a service link or a service script that is of a requested service and that is bound to network capability invoking information of different operators, so that the service parsing unit identifies the different operators and invokes a network capability of an operator to which the terminal device belongs.

In a second possible implementation manner of the second aspect, an operator option is further provided in the web page, and the web page includes the service link or the service script that is of the requested service and that is bound to the network capability invoking information of the different operators; and the service parsing unit is specifically configured to: when the service link is being processed or the service script is being executed, obtain, by parsing according to an operator selected by a user, a network capability interface and address information of an operator capability enablement platform that are corresponding to the operator selected by the user.

In a third possible implementation manner of the second aspect, the web page includes the service link or the service script that is of the requested service and that is bound to the network capability invoking information of the different operators, and an operator identification script is further integrated into the service link or into the service script of the requested service; the service parsing unit is specifically configured to execute the operator identification script when the service link is being processed or the service script is being executed, so as to identify an operator to which the terminal device belongs and obtain, by parsing, a network capability interface and address information of an operator capability enablement platform that are corresponding to the operator.

In a fourth possible implementation manner of the second aspect, the network capability interface includes: at least one of a quality of service interface, a charging interface, and a network status query interface.

According to a third aspect, a network capability invoking system is provided, including: an operator network capability enablement platform, any one of the foregoing application servers, and any one of the foregoing terminal devices; where the application server integrates network capability invoking information provided by the operator network capability enablement platform into a web page of a related service; and the terminal device downloads, from the application server, and parses the web page, and invokes the network capability interface according to address information of an operator capability enablement platform, so as to request a corresponding network capability from the operator network capability enablement platform.

According to a fourth aspect, a network capability invoking method is provided, including:
integrating, by an application server, network capability invoking information provided by an operator into a web page in the application server, and binding, by the application server, the network capability invoking information to a service link or a service script of a corresponding service in the web page, where the network capability invoking information includes a network capability interface needed by the corresponding service and address information of an operator capability enablement platform; and
delivering, by the application server, the web page to a terminal device, so that when processing the service link or processing the service script, the terminal device invokes the network capability interface from the operator capability enablement platform according to the address information of the operator capability enablement platform.

In a first possible implementation manner of the fourth aspect, the binding, by the application server, the network capability invoking information to a service link or a service script of a corresponding service in the web page specifically includes:
binding respective network capability invoking information of different operators to the service link or the service script of the corresponding service, so that the terminal device identifies the different operators and invokes a network capability of a corresponding operator.

In a second possible implementation manner of the fourth aspect, the binding, by the application server, the network capability invoking information to a service link or a service script of a corresponding service in the web page specifically includes:
binding the respective network capability invoking information of the different operators to the service link or the service script of the corresponding service, and providing an operator option in the web page for a user to select, so that the terminal device identifies the different operators and invokes a corresponding network capability interface according to address information of an operator capability enablement platform to which the terminal device belongs.

In a third possible implementation manner of the fourth aspect, the binding, by the application server, the network capability invoking information to a service link or a service script of a corresponding service in the web page specifically includes:
binding the respective network capability invoking information of the different operators to the service link or the service script of the corresponding service, and integrating an operator identification script into the service link or into the service script, where the operator identification script is used to identify an operator to which the terminal device belongs, so that the terminal device invokes a corresponding network capability interface according to address information of an operator capability enablement platform to which the terminal device belongs.

In a fourth possible implementation manner of the fourth aspect, the network capability interface includes: at least one of a quality of service interface, a charging interface, and a network status query interface.

According to a fifth aspect, a network capability invoking method is provided, including:
receiving, by a terminal device, a web page delivered by an application server, where the web page includes a service link or a service script that is of a service and that is bound to network capability invoking information provided by an operator, and the network capability invoking information includes: a network capability interface and address information of an operator capability enablement platform;
parsing, by the terminal device, the web page when the service link is being processed or the service script is being processed, so as to obtain the network capability interface and the address information of the operator capability enablement platform; and
invoking, by the terminal device, the network capability interface according to the address information of the operator capability enablement platform, so as to request a corresponding network capability from the operator.

In a first possible implementation manner of the fifth aspect, the web page includes a service link or a service script that is of a requested service and that is bound to network capability invoking information of different operators, so that the terminal device identifies the different operators and invokes a network capability of an operator to which the terminal device belongs.

In a second possible implementation manner of the fifth aspect, an operator option is further provided in the web page, and the web page includes the service link or the service script that is of the requested service and that is bound to the network capability invoking information of the different operators; and the service parsing unit is specifically configured to: when the service link is being processed or the service script is being executed, obtain, by parsing according to an operator selected by a user, a network capability interface and address information of an operator capability enablement platform that are corresponding to the operator selected by the user.

In a third possible implementation manner of the fifth aspect, the web page includes the service link or the service script that is of the requested service and that is bound to the network capability invoking information of the different operators, and an operator identification script is further integrated into the service link or into the service script of the requested service; the service parsing unit is specifically configured to execute the operator identification script when the service link is being processed or the service script is being executed, so as to identify an operator to which the terminal device belongs and obtain, by parsing, a network capability interface and address information of an operator capability enablement platform that are corresponding to the operator.

In a fourth possible implementation manner of the fifth aspect, the network capability interface includes: at least one of a quality of service interface, a charging interface, and a network status query interface; and an operator network capability enablement platform provides a network capability corresponding to the network capability interface.

In the embodiments of the present invention, an application server integrates a network capability interface of a network capability provided by an operator into a corresponding web page, and invoking of the network capability interface is triggered by a terminal device by parsing the page, so as to reduce processing complexity of the application server and decrease an implementation cost of the application server.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic diagram of a network capability enablement architecture in the prior art;
FIG. 2 is a flowchart of invoking a charge deduction network capability according to an existing network capability enablement architecture;
FIG. 3 is a schematic structural diagram of an application server according to an embodiment of the present invention;
FIG. 4 is a schematic structural diagram of a terminal device according to an embodiment of the present invention;
FIG. 5 is a schematic diagram of a network capability enablement architecture according to an embodiment of the present invention;
FIG. 6 is a flowchart of a network capability invoking method according to an embodiment of the present invention;
FIG. 7 is a flowchart of another network capability invoking method according to an embodiment of the present invention;
FIG. 8 is a flowchart of invoking a charge deduction network capability by using a network capability enablement architecture according to the present invention;
FIG. 9 is a flowchart of invoking a network status query capability by using a network capability enablement architecture according to the present invention;
FIG. 10 is a flowchart of invoking a bandwidth request capability by using a network capability enablement architecture according to the present invention; and
FIG. 11 is a schematic structural diagram of hardware of an application server according to the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

In the following, specific implementation manners of the present invention are further described in detail with reference to accompanying drawings and embodiments. The following embodiments are used for illustrating the present invention, but not limiting the scope of the present invention.

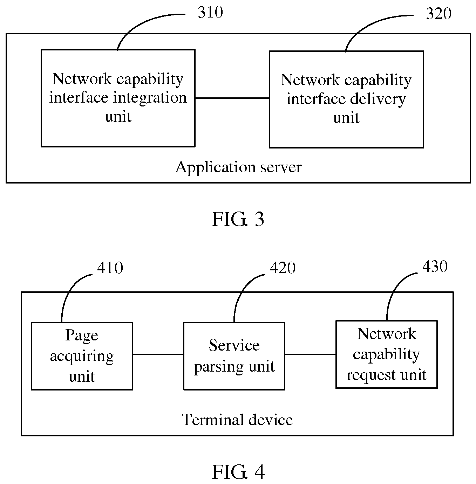

A first embodiment of the present invention provides an application server, and as shown in FIG. 3, the application server includes a network capability interface integration unit 310 and a network capability interface delivery unit 320.

The network capability interface integration unit 310 is configured to: integrate network capability invoking information provided by an operator into a web page, that is, an HTML page, in the application server; and bind the network capability invoking information to a service link (URL) or a service script of a corresponding service in the web page. The network capability interface delivery unit 320 is configured to deliver the web page to a terminal device, so that when processing the service link or processing the service script, the terminal device invokes the network capability interface from the operator capability enablement platform according to address information of the operator capability enablement platform.

The network capability invoking information includes a network capability interface needed by the corresponding service and the address information of the operator capability enablement platform, so that when processing (for example, clicking) the service link or executing the service script, the terminal device invokes the network capability interface from the operator capability enablement platform according to the address information. When the network capability interface is bound to the service link (URL) or the service script of the corresponding service in the web page, the application server provides service description information corresponding to the network capability interface, for example, description information of an IP 5-tuple and a service identifier that are of the corresponding service, and another attribute of the corresponding service, so that the network capability is invoked when the service is being executed. For example, in a process in which an electronic book is being downloaded by the terminal device, a charge deduction network capability is invoked, so as to perform charge deduction on traffic for downloading the electronic book.

The address information of the operator capability enablement platform may be a URL of the capability enablement platform. A browser is generally installed in a terminal device, and in order to facilitate invoking the browser by a terminal device, a JAVA script or a network capability interface of a RESTFUL (REpresentational State Transfer) style is provided by the operator capability enablement platform, so as to facilitate JAVA script and RESTFUL code parsing by the browser. Network capabilities provided by the operator generally include a charging capability, network status query, quality of service, and the like of the operator; and corresponding interfaces are: a charging interface, a network status query interface, and a quality of service interface.

Different terminal devices may sign a contract with different operators, and therefore, for a same service, the application server provides different network capability interfaces of the service according to different operators. In order to distinguish between terminal devices of different operators, further, the network capability interface integration unit 310 may bind network capability invoking information of the different operators to the service link or the service script that is of the corresponding service, so that the terminal device identifies the different operators and invokes a network capability of a corresponding operator.

Specifically, the network capability interface integration unit 310 may provide an operator option in the web page for a user to select. For example, in a same case of being requested to provide a network capability of network status query, different operators provide different interfaces that are used to request to provide the network capability of network status query for users of the different operators, and address information of operator capability enablement platforms of the different operators are also different. In this case, the application server integrates network capability invoking information of network status query provided by the different operators into a web page of a corresponding service, and binds the network capability invoking information to a service link or a service script of the service. An operator option is provided in the web page for a user to select, for example, a link of China Mobile and a link of China Unicom may be separately provided for the service, and each is bound to address information of an operator capability enablement platform and a network capability interface that is of a corresponding operator and is used to request to provide network bandwidth.

In order to distinguish between the terminal devices of the different operators, the network capability interface integration unit 310 may further bind the network capability invoking information of the different operators to the service link or the service script of the corresponding service, and integrate an operator identification script, that is used to identify an operator to which the terminal device belongs, into the service link or into the service script, so that the terminal device invokes a network capability interface of a corresponding operator according to address information of a corresponding operator capability enablement platform. For example,
a system API of the terminal device is invoked in the operator identification script to acquire information about the operator to which the terminal device belongs. The script may be in the following format:

```
         System.getCurrentOperator (Operator information);
         if the Operator information = operator 1,
         a network capability interface API1 is invoked; or
         if the Operator information = operator 2,
         a network capability interface API2 is invoked.
```

The application server in this embodiment may determine whether to register with a capability enablement platform of an operator according to whether a network capability interface provided by the capability enablement platform of the operator is charged or free of charge; and if the network capability is charged, the application server can obtain permission to use the network capability interface only by registering with the capability enablement platform, or if the network capability is free of charge, the application server may use the network capability interface without registering with the capability enablement platform.

The application server in this embodiment integrates network capability invoking information into an HTML page that provides a service, no extra processing is subsequently performed on each terminal device, and a related invoking operation is distributed to and performed on each terminal device, thereby simplifying processing complexity of the application server, and reducing an implementation cost of the application server.

A second embodiment of the present invention provides a terminal device, and as shown in FIG. 4, the terminal device includes a page acquiring unit 410, a service parsing unit 420, and a network capability request unit 430.

The page acquiring unit 410 is configured to receive a web page delivered by an application server. The application server integrates network capability invoking information into a web page of a corresponding service, and therefore, the web page includes a service link or a service script that is of a requested service and that is bound to network capability invoking information provided by an operator, and the network capability invoking information includes: a network capability interface and address information of an operator capability enablement platform. The network capability interface includes service description information corresponding to the network capability interface, for example, description information of an IP 5-tuple and a service identifier that are of the corresponding service, and another attribute of the corresponding service. Network capabilities provided by the operator generally include a charging capability, network status query, quality of service, and the like of the operator; and corresponding interfaces include: a charging interface, a network status query interface, a quality of service interface, and the like.

When acquiring a web page, the terminal device may actively send a request to the application server; that is, when having a requirement for a service, a user requests, by using a browser in the terminal device, a web page that is corresponding to the service. It may also be that a web page actively pushed by the application server is received; for example, in a scenario in which the terminal device downloads an electronic book, some electronic books are electronic books whose episodes are serial and are weekly updated, and when one episode is updated, the application server pushes a download page of the electronic book to a terminal device that has downloaded the electronic book, so that the user performs downloading in time. For some subscription services (for example, news and weather), the terminal device may receive all web pages of the services in a manner of pushing by the application server.

The service parsing unit 420 is configured to: parse the web page when the service link is being processed or the service script is being processed, so as to obtain the network capability interface and the address information of the operator capability enablement platform.

The network capability request unit 430 is configured to: invoke the network capability interface according to the address information of the operator capability enablement platform, so as to request a corresponding network capability from the operator. The request may be carried in the HTTP or HTTPs protocol, that is, when executing a corresponding service, the terminal device uses a requested operator to execute a corresponding network capability; for example, in a case in the background, when an electronic book is being downloaded, an operator is requested to perform charge deduction on downloading traffic thereof.

The web page includes a service link or a service script that is of a requested service and that is bound to network capability invoking information of different operators, so that the service parsing unit identifies the different operators and invokes a network capability of an operator to which the terminal device belongs.

Specifically, if the application server further provides an operator option in the web page, and the web page includes the service link or the service script that is of the requested service and that is bound to the network capability invoking information of the different operators, the service parsing unit 420 may obtain, by parsing according to an operator selected by a user, a network capability interface and address information of an operator capability enablement platform that are corresponding to the operator selected by the user.

If the application server integrates the network capability invoking information into the web page, so that the web page includes the service link or the service script that is of the requested service and that is bound to the network capability invoking information of the different operators, and an operator identification script is further integrated into the service link or into the service script of the requested service, the service parsing unit 420 may further execute the operator identification script, so as to identify the operator to which the terminal device belongs and obtain, by parsing, the network capability interface and the address information of the operator capability enablement platform that are corresponding to the operator.

In this embodiment, the page acquiring unit 410, the service parsing unit 420, and the network capability request unit 430 may be a client that implements the foregoing functions in the terminal device. Preferably, the foregoing units may be functional units corresponding to a browser in the terminal device. Because an existing terminal browser has a capability of parsing a JAVA script or an API of a RESTFUL style, the terminal device may not be changed at all.

In this embodiment, by using a terminal device browser to invoke a network capability interface whose network capability is enabled, an application server distributes centralized network capability interface invoking to a terminal device of a user for execution. For the terminal device, each time when a service is performed, the network capability interface needs to be invoked only once, and an added extra processing capability is insignificant; however, for the application server, a large quantity of processing capabilities (which is proportional to a quantity of users supported by the application server) can be saved.

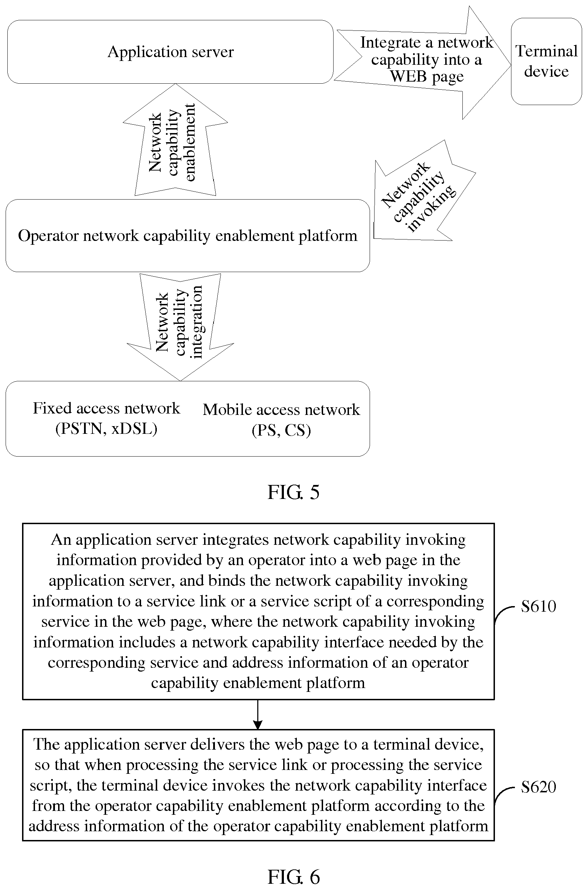

A third embodiment of the present invention provides a network capability invoking system, of which a schematic architecture is shown in FIG. 5, and the network capability invoking system includes: an operator network capability enablement platform, any one of the foregoing application servers, and any one of the foregoing terminal devices; where the application server integrates network capability invoking information provided by the operator network capability enablement platform into a web page of a related service; and the terminal device downloads, from the application server, and parses the web page, and invokes the network capability interface according to address information of an operator capability enablement platform, so as to request a corresponding network capability from the operator network capability enablement platform.

A fourth embodiment of the present invention provides a network capability invoking method based on the foregoing network capability invoking system, where an execution body is an application server, and as shown in FIG. 6, the method includes:

Step S610: The application server integrates network capability invoking information provided by an operator into a web page in the application server, and binds the network capability invoking information to a service link or a service script of a corresponding service in the web page, where the network capability invoking information includes a network capability interface needed by the corresponding service and address information of an operator capability enablement platform.

Step S620: The application server delivers the web page to a terminal device, so that when processing the service link or processing the service script, the terminal device invokes the network capability interface from the operator capability enablement platform according to the address information of the operator capability enablement platform.

In step S610, that the application server binds the network capability invoking information to a service link or a service script of a corresponding service in the web page specifically includes: binding respective network capability invoking information of different operators to the service link or the service script of the corresponding service, so that the terminal device identifies the different operators and invokes a network capability of a corresponding operator. Specifically, the following two manners may be included:
1. The application server binds the respective network capability invoking information of the different operators to the service link or the service script of the corresponding service, and provides an operator option in the web page for a user to select, so that the terminal device identifies the different operators and invokes a corresponding network capability interface according to address information of an operator capability enablement platform to which the terminal device belongs.
2. The application server binds the respective network capability invoking information of the different operators to the service link or the service script of the corresponding service, and integrates an operator identification script into the service link or into the service script, where the operator identification script is used to identify an operator to which the terminal device belongs, so that the terminal device invokes a corresponding network capability interface according to address information of an operator capability enablement platform to which the terminal device belongs.

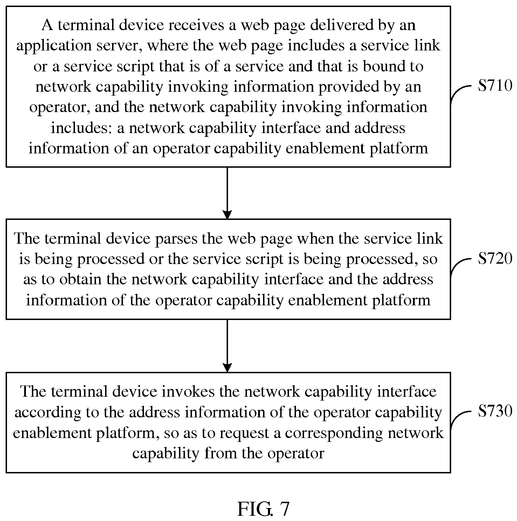

A fifth embodiment of the present invention provides a network capability invoking method based on the foregoing network capability invoking system, where an execution body is a mobile terminal, and as shown in FIG. 7, the method includes:

Step S710: The terminal device receives a web page delivered by an application server, where the web page includes a service link or a service script that is of a service and that is bound to network capability invoking information provided by an operator, and the network capability invoking information includes: a network capability interface and address information of an operator capability enablement platform.

Network capabilities provided by the operator generally include a charging capability, network status query, quality of service, and the like of the operator; and corresponding interfaces are: a charging interface, a network status query interface, and a quality of service interface.

Step S720: The terminal device parses the web page when the service link is being processed or the service script is being processed, so as to obtain the network capability interface and the address information of the operator capability enablement platform.

Step S730: The terminal device invokes the network capability interface according to the address information of the operator capability enablement platform, so as to request a corresponding network capability from the operator.

The web page includes a service link or a service script that is of a requested service and that is bound to network capability invoking information of different operators, so that the terminal device identifies the different operators and invokes a network capability of an operator to which the terminal device belongs.

Specifically, an operator option is further provided in the web page, and the web page includes the service link or the service script that is of the requested service and that is bound to the network capability invoking information of the different operators; step S720 specifically includes: obtaining, by parsing according to an operator selected by a user, a network capability interface and address information of an operator capability enablement platform that are corresponding to the operator selected by the user.

The web page includes the service link or the service script that is of the requested service and that is bound to the network capability invoking information of the different operators, and an operator identification script is further integrated into the service link or into the service script of the requested service; step S720 specifically includes: executing the operator identification script to identify an operator to which the terminal device belongs, so as to obtain, by parsing, a network capability interface and address information of an operator capability enablement platform that are corresponding to the operator.

The following uses three specific scenarios to further describe the present invention.

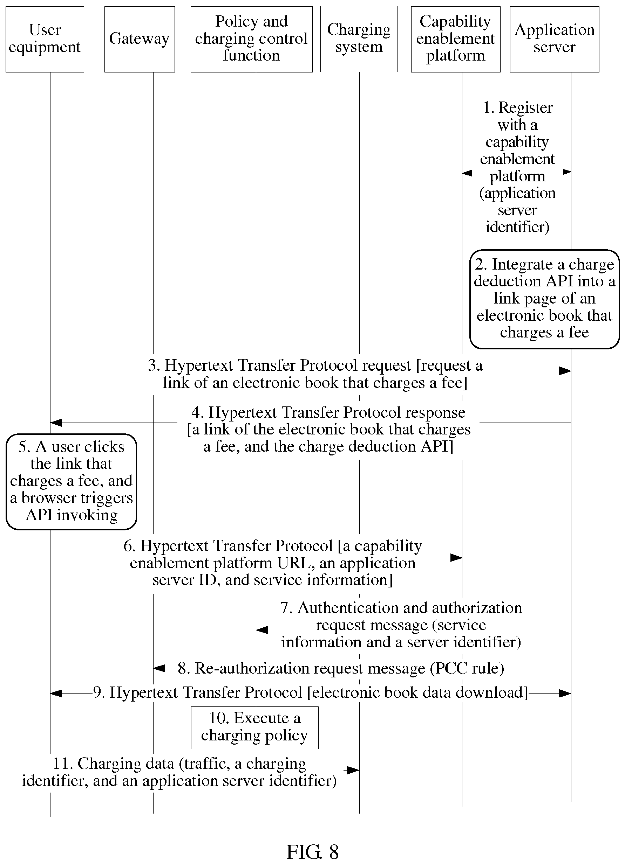

Scenario 1: As shown in FIG. 8, that when an electronic book that charges a fee is downloaded, an application server pays a traffic fee of the electronic book for a user to encourage user downloading is used as an example, and a process is as follows:
(1) The application server registers with a capability enablement platform of a mobile operator. In a registration process, the capability enablement platform allocates an application service identifier to the application server, so as to uniquely identify the application service in the capability enablement platform.
(2) The application server integrates a network capability API into an HTML page, that is, in this example, integrates a charge deduction API provided by the capability enablement platform into a link page of the electronic book that charges a fee. In order to facilitate invoking on a terminal side, the capability enablement platform provides a JAVA script or a charge deduction API of a RESTFUL style, and the API includes address information of the capability enablement platform, where the address information may be a URL of the capability enablement platform. Because the charge deduction API needs service information, when integrating the API into the HTML page, the application server needs to provide service description (for example, information such as an IP 5-tuple that is for electronic book downloading and a file size of an electronic book) corresponding to the API. The application server binds the API to the URL of the electronic book that charges a fee.

It should be noted that, steps (1) and (2) are irrelevant to a user terminal device and can be implemented by the application server by performing the foregoing operations only once. The HTML page that integrates the network capability API is for all users, instead of being separately generated for each user.
(3) The user requests, by using HTTP, a download address of the electronic book that charges a fee.
(4) The application server returns the HTML page that includes the download address (URL) of the electronic book that charges a fee and the charge deduction API that is bound to the download address, where the charge deduction API includes an application service identifier (an electronic book website), service information (the IP 5-tuple for downloading the electronic book that charges a fee and the file size), and the address information (URL) of the capability enablement platform.
(5) When the user clicks a download link of the electronic book that charges a fee, a browser in the user equipment triggers invoking of the API according to a binding relationship between the charge deduction API and the link of the electronic book.
(6) According to the address information (URL) of the capability enablement platform that is included in the charge deduction API, the user browser requests the capability enablement platform to perform charge deduction on traffic of the electronic book, where the request includes service identification information of the electronic book, the file size of the electronic book, and an identifier of the application service, and the request may be carried in the HTTP or HTTPs protocol.
(7) Because information included in charge deduction invoking on the terminal side is the same as information included in invoking on an application server side, subsequent processing is the same as that in the prior art.

It can be seen from the scenario that the application server needs to register with the network capability enablement platform only once, and integrates the network capability API into the HTML page; no extra processing is subsequently performed for each user that downloads the electronic book, and a related invoking operation is distributed to and performed on each terminal, thereby simplifying processing complexity of the application server.

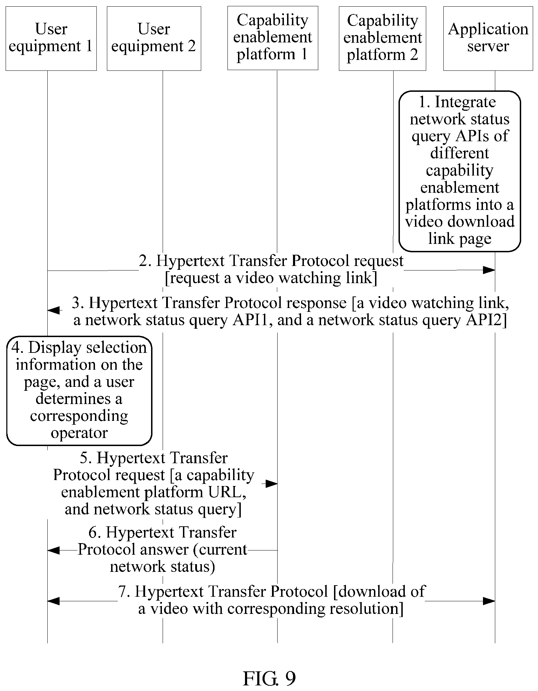

Scenario 2: As shown in FIG. 9, in this scenario, the application server provides video on demand services of different resolutions (high definition, standard definition, and the like), the application server expects to be capable of providing, according to a current wireless network status of a user, a high resolution video when a network is idle, and providing a low resolution video when the network is congested, so as to ensure that the user can watch the videos smoothly. For an operator, a service can be adapted to the network by enabling a network status query API, which can avoid further deterioration when the network is congested, and is also facilitate network smooth use by the operator. Therefore, different from scenario 1, the capability enablement platform of the operator may provide the API for a third-party application for free. A specific procedure is as follows:
(1) Because the network status query API is provided for free, the application server does not need to register with the capability enablement platform to obtain permission to use the API. A video download server binds the network status query API to one (or multiple) video link. Because capability enablement platforms of different operators provide network status query APIs, formats of the APIs are different, and corresponding addresses of the capability enablement platforms are also different. In order to avoid determining a mobile operator to which the user belongs, the application server may integrate network status query APIs of multiple capability enablement platforms into a video download page. In addition, the application server may instruct, in the page, the browser to display operator selection information.
(2) The user requests an HTML page of a video on demand by using HTTP.
(3) The application server returns the HTML page, which includes a video on demand address (URL) and network status query APIs of multiple capability enablement platforms that are bound to the video on demand address. Formats of these network status query APIs may be different, but these network status query APIs include respective address information of the capability enablement platforms.
(4) According to a downloaded page, the terminal browser displays the selection information on the HTML page, for example, it is displayed that a China Mobile user selects a link 1, and a China Unicom user selects a link 2. A user knows an operator to which the user belongs, and then clicks a corresponding link to watch a video.
(5) According to a result selected by the user, the browser queries a current network status from a capability enablement platform to which the user belongs.
(6) The capability enablement platform determines an identifier of the user according to information such as a source IP address that initiates the request, and returns a status of a wireless network in which the user is currently located; if the user selects a wrong operator in step (4), for example, a China Mobile user selects the link corresponding to a China Unicom user, the capability enablement platform of China Unicom determines, according to a source IP address of a request message, that the user does not belong to the China Unicom operator, and directly returns error information.
(7) The browser requests a video download from a video server, where the request includes network status information obtained in step (6); the video server provides a video of a corresponding resolution to the user according to the network status information.

It can be seen from this scenario that, for users that belong to different operators, the application server may integrate network capability APIs of multiple operators into the HTML page, and the users select a corresponding operator and trigger invoking of a network capability API from a corresponding network capability enablement platform. The application server avoids complicated processing for processing users of different operators and invoking performed on the capability enablement platforms of the operators, thereby simplifying implementation of the server.

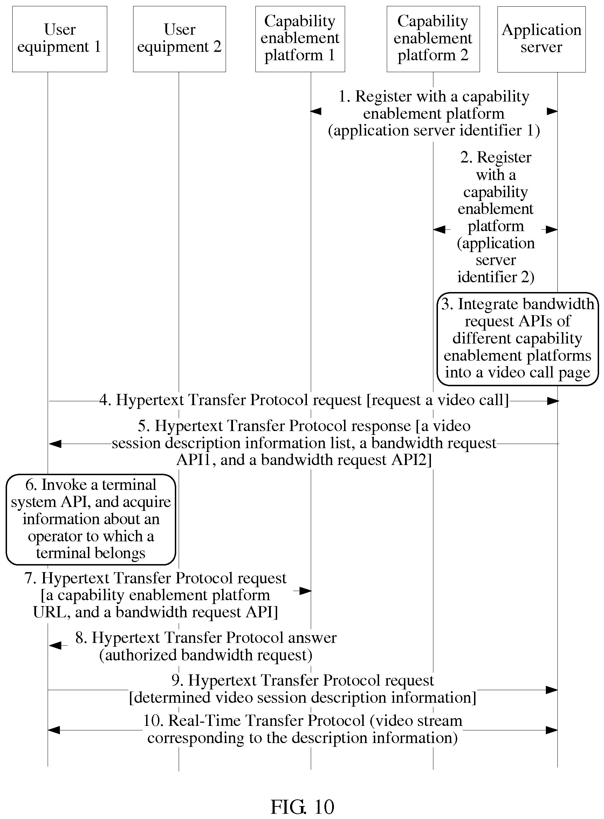

Scenario 3: As shown in FIG. 10, remote education or a remote medical service is provided by the application server. The application server expects a network to provide guaranteed bandwidth such as 1 Mbit/s to ensure a video call between both parties can be performed smoothly, so as to ensure an effect of the education or the medical service. For an operator, a bandwidth request API needs to provide an extra wireless resource for the service, and therefore, the API charges a fee, which can bring extra revenue to the operator. A specific procedure is as follows:
(1) Because the bandwidth request API charges a fee, the application server needs to register with a capability enablement platform to obtain permission to use the API, and because the application server may provide a service for users of different operators, the application server registers with capability enablement platforms of different operators. For this embodiment, if users of the application server may come from two operators, the application server first registers with a capability enablement platform 1 of the operators, and the capability enablement platform allocates an application service identifier 1 to the application server, so as to uniquely identify the application service on the capability enablement platform 1.
(2) Likewise, the application server registers with a capability enablement platform 2, and the capability enablement platform 2 allocates an application service identifier 2 to the application server, so as to uniquely identify the application service on the capability enablement platform 2. It should be noted that the application identifier 1 and the application identifier 2 are independent and may be different.
(3) The application server integrates bandwidth request APIs provided by the capability enablement platform 1 and the capability enablement platform 2 into a video call page, where the bandwidth request APIs include address information of their respective capability enablement platforms. Specific implementation of integration into the video call page is that the application server binds the bandwidth request APIs to a video call script and provides service information description needed by the bandwidth request APIs, such as server address information of the video call, information about bandwidth needed by the video call, and application service identification information.

Different from Embodiment 2, in this embodiment, the application server does not instruct a browser to present operator selection information to a user, but adds a script to trigger the browser to invoke a system API to acquire information about an operator to which a terminal belongs.

The script may be in the following format:

```
         System.getCurrentOperator (Operator information);
         if the Operator information = operator 1,
         a bandwidth request API1 is invoked; or
         if the Operator information = operator 2,
         a bandwidth request API2 is invoked.
```

(4) The user requests an HTML page of the video call by using HTTP, for example, a video call is established with a teacher or a doctor.
(5) The application server returns the HTML page, where the HTML page includes a video session description information list, and the list includes an address of a communication peer end, a video coding format set supported by the peer end, and the like; the page further includes script information that triggers a video call service and bandwidth request APIs of multiple capability enablement platforms bound to the script information.
(6) Before invoking a script of the video call service, the terminal browser first invokes an operator selection script added by the application server, so as to acquire the operator information from the terminal; for example, network operator information is acquired from setting information of an Android mobile phone, and a corresponding bandwidth request API is selected according to the information.
(7) The browser invokes the bandwidth request API from a capability enablement platform to which the user belongs, where the bandwidth request API includes address information of the capability enablement platform, service description information, and application identification information. For this embodiment, the user belongs to the operator 1; therefore, the address information of the user is the capability enablement platform 1, and the application identification information is the application identifier 1.
(8) The capability enablement platform 1 authenticates the application identifier, authorizes the application to invoke the bandwidth request, and returns an authorized bandwidth value.
(9) According to the returned bandwidth value, the browser invokes a subsequent voice call script, for example, enables a local camera; selects a proper video coding format and resolution according to authorized uplink bandwidth; and returns acknowledged session description information to the application server according to authorized downlink bandwidth, so as to instruct the peer end to select the proper video coding format and the resolution.
(11) According to the determined session description information, the user terminal and the peer end start a video call, and transmit a video stream to each other by using a real-time media transfer protocol.

It can be seen from this scenario that, for users that belong to different operators, the application server may integrate network capability APIs of multiple operators into the HTML page, and instruct, in the page, the browser to invoke the system API to acquire the operator to which the terminal belongs, and invoke a network capability API of a corresponding capability platform according to the operator, thereby simplifying implementation of the server.

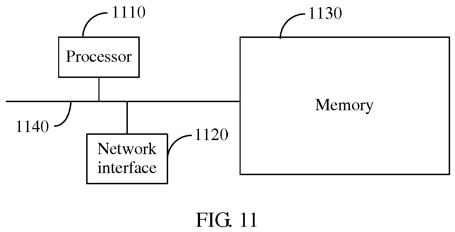

In another embodiment of the present invention, the application server in the foregoing embodiment may be as shown in FIG. 11, and includes at least one processor 1110 (such as a CPU), at least one network interface 1120 or another communications interface, a memory 1130, and at least one communications bus 1140 that is used to implement connection and communication between the apparatuses. The processor 1110 is configured to execute an executable module, such as a computer program, stored in the memory 1130. The memory 1130 may include a high-speed random access memory (Random Access Memory, RAM), or may further include a non-volatile memory (non-volatile memory), for example, at least one magnetic disk storage. By using at least one network interface 1120 (with or without a cable), a system gateway communicates with at least one another network element, and an internet, a wide area network, a local area network, a metropolitan area network, and the like may be used.

In some implementation manners, the memory 1130 stores a program, where the program may be executed by the processor 1110, and the program includes:
integrating network capability invoking information provided by an operator into a web page in an application server, and binding the network capability invoking information to a service link or a service script of a corresponding service in the web page, where the network capability invoking information includes a network capability interface of the corresponding service and address information of an operator capability enablement platform; and delivering the web page to a terminal device, so that when processing the service link or processing the service script, the terminal device invokes the network capability interface from the operator capability enablement platform according to the address information of the operator capability enablement platform.

A person of ordinary skill in the art may understand that, each aspect of the present invention or a possible implementation manner of each aspect may be specifically implemented as a system, a method, or a computer program product. Therefore, each aspect of the present invention or a possible implementation manner of each aspect may use forms of hardware only embodiments, software only embodiments (including firmware, resident software, and the like), or embodiments with a combination of software and hardware, which are uniformly referred to as "circuit", "module", or "system" herein. In addition, each aspect of the present invention or the possible implementation manner of each aspect may take a form of a computer program product, where the computer program product refers to computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may in fact be executed substantially at the same time, or these blocks may sometimes be executed in reverse order.

## Claims

1. A network capability invoking method comprising:
- registering, by an application server, with a capability enablement platform of a mobile operator, wherein, in a registration process, the capability enablement platform allocates an application service identifier to the application server, so as to uniquely identify the application service in the capability enablement platform;
- integrating, by the application server, a network capability API into an HTML page, wherein the API provided by the capability enablement platform is a charge deduction API of a RESTFUL style, and the API includes address information of the capability enablement platform, wherein, when integrating the API into the HTML page, the application server provides a service description corresponding to the API; and
- when a user requests, via a user equipment, using HTTP, a download address of an application service instance that charges a fee,
∘ returning, by the application server to the user equipment, the HTML page that includes the download link of the service instance that charges a fee and the charge deduction API that is bound to the download address included in the the download link, where the charge deduction API includes an application service identifier, service instance information, and the address information of the capability enablement platform;
∘ when the user clicks the download link of the service instance that charges a fee, triggering, by a browser in the user equipment, invoking of the API according to a binding relationship between the charge deduction API and the link to the service instance, and;
requesting, by the browser in the user equipment, according to the address information of the capability enablement platform that is included in the charge deduction API, the capability enablement platform to perform charge deduction on traffic of the service instance, where the request includes service instance identification information of the service instance, the file size of the service instance, and an identifier of the application service, and the request is carried in the HTTP or HTTPs protocol.

2. The method of claim 2, wherein integrating, by the application server, the network capability API into an HTML page comprises integrating a charge deduction API provided by the capability enablement platform into a link page of the service instance that charges a fee.

3. The method of claims 1 or 2, wherein the service instance that charges a fee is an electronic book that charges a fee and the service instance information provided by the application server comprises an IP 5-tuple for electronic book downloading and a file size of an electronic book.

4. The method of any of the preceding claims, wherein the address information is a URL of the capability enablement platform.

5. The method of any of the preceding claims, wherein the application service identifier comprises an electronic book website.

## Patentansprüche

1. Netzwerkfähigkeitsaktivierungsverfahren, das Folgendes umfasst:
- Registrieren durch einen Anwendungsserver bei einer Fähigkeitsaktivierungsplattform eines Mobilfunkbetreibers, wobei die Fähigkeitsaktivierungsplattform beim Registrierungsprozess dem Anwendungsserver eine Anwendungsdienstkennung zuordnet, um den Anwendungsdienst in der Fähigkeitsaktivierungsplattform eindeutig zu identifizieren;
- Integrieren durch den Anwendungsserver einer Netzwerkfähigkeits-API in eine HTML-Seite, wobei die von der Fähigkeitsaktivierungsplattform bereitgestellte API eine Kostennachlass-API eines RESTFUL-Stils ist und die API Adressinformationen der Fähigkeitsaktivierungsplattform beinhaltet, wobei, wenn die API in die HTML-Seite des Anwendungsservers integriert wird, der Anwendungsserver eine Dienstbeschreibung bereitstellt, die der API entspricht; und
- wenn ein Benutzer via eine Teilnehmereinrichtung unter Verwendung von HTTP eine Downloadadresse einer Anwendungsdienstinstanz, die eine Gebühr berechnet, anfordert,
o Zurückgeben durch den Anwendungsserver an die Teilnehmereinrichtung der HTML-Seite, die den Downloadlink der Dienstinstanz, die eine Gebühr berechnet, und die Kostennachlass-API, die an die Downloadadresse gebunden ist, die im Downloadlink beinhaltet ist, wo die Kostennachlass-API eine Anwendungsdienstkennung, Dienstinstanzinformationen und die Adressinformationen der Fähigkeitsaktivierungsplattform beinhaltet;
o wenn der Benutzer auf den Downloadlink der Dienstinstanz klickt, die eine Gebühr berechnet, Auslösen durch einen Browser in der Teilnehmereinrichtung, des Aufrufens der API gemäß einer Bindungsbeziehung zwischen der Kostennachlass-API und dem Link zur Dienstinstanz und;
Anfordern durch den Browser in der Teilnehmereinrichtung gemäß den Adressinformationen der Fähigkeitsaktivierungsplattform, die in der Kostennachlass-API beinhaltet sind, dass die Fähigkeitsaktivierungsplattform einen Kostennachlass für den Verkehr der Dienstinstanz durchführt,
wo die Anforderung Dienstinstanzidentifikationsinformationen der Dienstinstanz, die Dateigröße der Dienstinstanz und eine Kennung des Anwendungsdienstes beinhaltet und die Anforderung im HTTP- oder HTTPs-Protokoll transportiert wird.

2. Verfahren nach Anspruch 2, wobei das Integrieren durch den Anwendungsserver der Netzwerkfähigkeits-API in eine HTML-Seite das Integrieren einer Kostennachlass-API, die von der Fähigkeitsaktivierungsplattform bereitgestellt wird, in eine Linkseite der Dienstinstanz, die eine Gebühr berechnet, umfasst.

3. Verfahren nach Anspruch 1 oder 2, wobei die Dienstinstanz, die eine Gebühr berechnet, ein elektronisches Buch ist, das eine Gebühr berechnet, und die Dienstinstanzinformationen, die vom Anwendungsserver bereitgestellt werden, ein IP-5-Tupel zum Downloaden eines elektronischen Buches und eine Dateigröße eines elektronischen Buches umfasst.

4. Verfahren nach einem der vorhergehenden Ansprüche, wobei die Adressinformationen eine URL der Fähigkeitsaktivierungsplattform sind.

5. Verfahren nach einem der vorhergehenden Ansprüche, wobei die Anwendungsdienstkennung eine Website für elektronische Bücher umfasst.

## Revendications

1. Procédé d'appel de capacité de réseau consistant :
- à enregistrer, au moyen d'un serveur d'application, avec une plate-forme d'activation de capacité d'un opérateur de télécommunications mobiles, dans lequel, dans un processus d'enregistrement, la plate-forme d'activation de capacité attribue un identifiant de service d'application au serveur d'application de sorte à identifier uniquement le service d'application dans la plate-forme d'activation de capacité ;
- à intégrer, au moyen du serveur d'application, une interface de programmation d'applications (API) de capacité de réseau dans une page HTML, dans lequel l'interface API fournie par la plate-forme d'activation de capacité est une interface API de déduction de frais du type RESTFUL et l'interface API comporte des informations d'adresse de la plate-forme d'activation de capacité, dans lequel, lors de l'intégration de l'interface API dans la page HTML, le serveur d'application fournit une description de service correspondant à l'interface API ; et
- lorsqu'un utilisateur demande, par le biais d'un équipement utilisateur, l'utilisation du protocole HTTP, une adresse de téléchargement d'une instance de service d'application qui fait payer des frais,
∘ à renvoyer, au moyen du serveur d'application, à l'équipement utilisateur, la page HTML qui comprend le lien de téléchargement de l'instance de service qui fait payer des frais et l'interface API de déduction de frais qui est liée à l'adresse de téléchargement incluse dans le lien de téléchargement, où l'interface API de déduction de frais comporte un identifiant de service d'application, des informations d'instance de service et des informations d'adresse de la plate-forme d'activation de capacité ;
∘ lorsque l'utilisateur clique sur le lien de téléchargement de l'instance de service qui fait payer des frais, à déclencher, au moyen d'un navigateur dans l'équipement utilisateur, un appel de l'interface API en fonction d'une relation de liaison entre l'interface API de déduction de frais et le lien à l'instance de service ; et
à demander, au moyen du navigateur dans l'équipement utilisateur, en fonction des informations d'adresse de la plate-forme d'activation de capacité qui sont incluses dans l'interface API de déduction de frais, à la plate-forme d'activation de capacité d'effectuer une déduction de frais sur le trafic d'instance de service,
où la demande comporte des informations d'identification d'instance de service de l'instance de service, la taille de fichier de l'instance de service et un identifiant du service d'application et la demande est transportée dans le protocole HTTP ou le protocole HTTPS.

2. Procédé selon la revendication 2, dans lequel l'intégration, par le serveur d'application, de l'interface API de capacité de réseau dans une page HTML consiste à intégrer une interface API de déduction de frais fournie par la plate-forme d'activation de capacité dans une page de lien de l'instance de service qui fait payer des frais.

3. Procédé selon les revendications 1 ou 2, dans lequel l'instance de service qui fait payer des frais, est un livre numérique qui fait payer des frais et les informations d'instance de service fournies par le serveur d'application comportent un 5-uplet IP pour le téléchargement du livre numérique et une taille de fichier d'un livre numérique.

4. Procédé selon l'une quelconque des revendications précédentes, dans lequel les informations d'adresse sont un URL de la plate-forme d'activation de capacité.

5. Procédé selon l'une quelconque des revendications précédentes, dans lequel l'identifiant de service d'application comprend un site Web de livre numérique.
